# EUROPÄISCHE PATENTSCHRIFT

(11) **EP 1 063 518 B1**
(45) Veröffentlichungstag und Bekanntmachung des Hinweises auf die Patenterteilung: **27.04.2005**
(21) Anmeldenummer: 00111529.4
(22) Anmeldetag: 30.05.2000
(51) Int. Cl.: G01N 21/35

(54) **Vorrichtung zur Analyse einer Gasprobe mittels Infrarot-Absorption**
Device for analyzing a gas sample with infrared absorption
Appareil pour analyser un échantillon gazeux par l'absorption d'infrarouge

(30) Priorität: 25.06.1999 DE 19929034
(43) Veröffentlichungstag der Anmeldung: 27.12.2000
(73) Patentinhaber: Pierburg Instruments GmbH, 41460 Neuss (DE)
(72) Erfinder: Weissmann, Hans, Dr., 90579 Langenzenn (DE)
(74) Vertreter: Ter Smitten, Hans

(56) Entgegenhaltungen:
- DE-A- 19 731 241
- US-A- 4 358 679
- US-A- 4 596 975
- US-A- 4 678 904
- US-A- 5 247 185
- US-A- 5 834 777

## Beschreibung

Die Erfindung betrifft eine Vorrichtung zur Analyse einer Gasprobe mittels Infrarot-Absorption nach dem Oberbegriff des Patentanspruchs 1.

Bei bekannten NDIR-Meßvorrichtungen (nicht-dispersives Infrarot) wird die Bestimmung einer Abgaskonzentration durch Infrarot-Absorptionsmessung (IR-Absorptionsmessung) ermittelt. Dabei wird eine Glasküvette (Messzelle) bestimmter Länge lichtdurchstrahlt, das von einem Strahler erzeugt wird, und die Absorption dieses emittierten Lichtstrahles innerhalb eines für das Gas spezifischen Wellenbereiches ermittelt. Der Wellenlängenbereich wird dabei nicht-dispersiv, d.h. mittels Interferenzfilter oder bestimmten Filtergasen festgelegt. Für eine genaue Messung geringer Konzentrationen ist eine lange Absorptionstrecke innerhalb der Messzelle zu wählen.
Die Absorptionsmessung funktioniert jedoch nur dann, wenn die Intensität des Lichtstrahls während seiner Messung konstant ist, wobei die aktuelle Intensitätsmessung mit einer Messung im 0-Gas (Null-Gas) verglichen wird und das Verhältnis daraus ein Maß für die Abgaskonzentration ist (Beersches Gesetz).
Die kurzzeitige Drift eines das Licht empfangenden Empfängers bzw. einer Verstärkerelektronik wird durch eine zusätzliche Wechsellichtmethode minimiert, wozu die Strahlung gechoppt oder der Strahler geblinkt wird.
Eine mittelfristige Drift der Empfängersignale, beispielsweise durch Temperaturänderungen des Empfängers oder des Strahlers, wird entweder durch eine thermische Stabilisierung der Empfänger oder durch Messung der Strahlertemperatur minimiert. Bei blinkenden Strahlern erfolgt meist dabei eine Nachkompensation der Empfängersignale anhand einer nichtabsorbierten Wellenlänge (Referenzbereich) des Meßgases mittels Referenzempfänger, während bei gechoppten Strahlern die Strahlertemperatur über eine zusätzliche Regelschaltung nachgeregelt wird.

Eine Infrarot-Absoprtionsmesszelle der gattungsgemäßen Art ist in der DE 297 22 579 U1 offenbart. Unter Bezugnahme auf die US 4,358,679 wird hierbei vorgeschlagen, eine Messstrecke in einer Messküvette derart zu verlängern, dass durch Strahlenreflexionen an zusätzlich eingebauten Spiegelflächen mindestens ein vierfacher Durchlauf des Messstrahls realisiert wird. Dabei befinden sich der Strahler und der Empfänger auf einer Seite der Messküvette, wobei beide getrennt voneinander angeordnet sind.

Ein weiterer Infrarot-Gasanalysator wird in der DE 198 08 128 A1 offenbart. Durch einen Behälter vor der Messküvette (White-Messzelle) wird die von einer Infrarot-Strahlungsquelle (IR-Strahlungsquelle) ausgesendete IR-Strahlung gebündelt und in die White-Messzelle eingekoppelt. Die White-Messzelle selbst weist drei konkave Spiegel mit demselben Krümmungsradius auf. Über die Spiegel wird die absorbierte IR-Strahlung dann aus der White-Messzelle an einen IR-Detektor gegeben. Der Behälter und die White-Messzelle sowie der IR-Detektor sind miteinander verbunden und bilden einen kompakten IR-Gasanalysator. Innerhalb der IR-Strahlungsquelle ist eine zusätzliche Fotodiode angeordnet, die als Detektor zur Erfassung der Lichtmenge der emittierten IR-Strahlung eines Emitterelementes (Strahlers) wirkt. Dadurch wird geprüft, ob das Emitterelement ein konstante Strahlungsmenge aussendet oder nicht. Eine auftretende Änderung wird dann programmtechnisch kompensiert. Die Strahlungsquelle und der Empfänger sind örtlich voneinander getrennt angeordnet. Nachteilig ist dabei, dass sich der komplexe Gasanalysator u.a. für einen Einsatz vor Ort nicht eignet. Aus der US 5,834,777 ist eine Anordnung bekannt, bei der der Strahler und der Empfänger auf einem gemeinsamen Substrat angeordnet sind.

Die DE 44 20 320 C2 offenbart ein Verfahren zur Messung der Konzentration einer Komponente in einem Probengas sowie einen IR-Gasanalysator zur Durchführung des Verfahrens. Dabei wird die Temperatur einer Lichtquelle (Strahler) gemessen und das emittierte Licht erst dann auf Detektoren (Empfängern) gegeben, wenn die Lichtquelle die für die Messung geeignete und vorbestimmte Temperatur erreicht hat. Der Strahler wird dabei so angesteuert, dass er blinkt. Mit diese Maßnahme wird der Temperatureinfluss der Lichtquelle auf die Detektoren minimiert.

Des weiteren ist aus der DE 197 31 241 eine Anordnung mit einem lichtemittierenden Strahler einer Messzelle, mindestens einem ebenen Spiegel, der an einer der Seiten der Messzelle angebracht ist, und einem lichtaufnehmenden Empfänger sowie einer Auswerteeinrichtung, wobei der Strahler und der Empfänger auf einem temperaturstabilisierten Träger in unmittelbarer Nähe zueinander und an der dem Spiegel gegenüberliegenden Seite der Messzelle angeordnet sind, bekannt.

Hieraus ergibt sich die Aufgabe der Erfindung, eine Vorrichtung zur Analyse einer Gasprobe mittels IR-Absorption aufzuzeigen, die driftunabhängig arbeitet, einfach aufgebaut und vor Ort einsetzbar ist.

Gelöst wird die Erfindung durch die Merkmale des Patentanspruchs 1.

Dabei liegt der Erfindung die Idee zugrunde, einen Strahler und einen Empfänger auf einem gemeinsamen, thermisch stabilisierten Träger in unmittelbarer Nähe zueinander und auf einer Seite einer Messküvette anzuordnen. Dabei werden sowohl die Empfängertemperatur als auch die Strahlertemperatur konstant gehalten, wodurch die thermische Drift des Strahlers und des Empfängers unterbunden werden. Dadurch entfallen zusätzliche thermische Korrekturmittel für den Strahler. Da nur eine Temperaturstabilisierungseinrichtung für den Strahler und den Empfänger gleichzeitig benötigt wird, verringert sich der Bauaufwand und der Kostenaufwand. Bedingt dadurch, dass der Strahler nun seinerseits mit seiner Abwärme auch den Empfänger mit heizt, sinkt der benötigte Energiebedarf für die benötigte Wärmeleistung, wodurch auch einfache Energieversorger eingesetzt werden können und die Vorrichtung vor Ort verwendet werden kann. Die Umgebungstemperatur selbst hat keinen Einfluss auf die Drifteigenschaften des Strahlers und Empfängers.
Dabei wird die Strahlerleistung (tatsächliche Intensität des Strahlers) in einem kürzerwelligen Bereich (NIR-Bereich = nahes Infrarot) gemessen und kontrolliert, da eine Änderung der Strahlertemperatur in diesem Bereich deutlich besser messbar ist, als im längerwelligen eigentlichen Messbereich. Diese Kontrolle der Strahlertemperatur kann mit einem ebenfalls temperaturstabilisierten IR-Bauelement , vorgenommen werden, die eine deutlich höhere Empfindlichkeit als der eigentliche Empfänger des Gasanalysators aufweist. Eine Strahlungsleistungsänderung im eigentlichen Messbereich von beispielsweise 3-5% entspricht dadurch in etwa einer Strahlungsleistungsschwankung im NIR-Bereich von ca. 30%, wodurch man eine bessere Aussage über die Strahlenleistungsänderung erhält. Dadurch kann mit geringem elektronischem Aufwand eine konkrete Aussage über die Strahlertemperatur getroffen werden.

### Vorteilhafte Ausführungen sind in den Unteransprüchen aufgezählt.

### So kann das IR-Element auf dem Träger untergebracht sein, wobei es vorteilhafterweise ein IR-Fotodiode ist.

So kann auf dem gemeinsamen Träger eine Direktheizung aufgebracht werden, die aus nur einem gemeinsamen Regel- und Heizelement als ein Bauteil besteht. Dieses Bauteil kann beispielsweise ein Transistorelement sein. Dadurch entfällt das sonst notwendige kostenintensive Heizelement, wie beispielsweise eine Heizfolie oder Heizwicklung. Ein weiterer Vorteil ist der hohe Wirkungsgrad der neuartigen Heizung, der im Bereich von 95-100% liegt. Die Steuerung der Heizung erfolgt störungsfrei im DC-Mode und kann dadurch sehr fein dosiert werden. Die Direktheizung erzeugt selbst keine Verlustwärme, wie bei linear geregelten Heizsystemen mit separatem Heizelement, und verursacht gleichfalls keine elektrischen Störungen, wie bei getakteten Heizsystemen.

Die bei der Signalverstärkung des Empfängersignals auftretenden analogen Signaldriften werden durch eine AC-Kopplung, beispielsweise über einem Kondensator, der Verstärkerstufen mit Signalklemmung unterdrückt, wodurch die Verstärkerstufen nur wechselspannungsmäßig (AC) an die vorherige Verstärkerstufe gekoppelt sind. Beispielsweise bei blinkenden NDIR-Systemen erreicht der Strahler am Ende der Aus-Phase seine tiefste Temperatur, wobei auch das Empfängersignal seinen kleinsten Wert erreicht. Dieser Wert wird durch die analoge Klemmschaltung, beispielsweise einem Schalter, auf einen definierten Spannungspegel einer ersten Verstärkerstufe geklemmt. Eine Drift des Arbeitspunktes der vorherigen Verstärkerstufe(n) wird dabei komplett ignoriert, d.h., das Ausgangssignal der vorherigen Verstärkerstufe wird immer auf den gleichen Signalpegel angehoben oder abgesetzt. Bei Einschaltung des Strahlers in den Blinkrhythmus wird die Klemmung abgeschaltet, so dass nur noch die AC-Kopplung der Verstärkerstufen bleibt. Dabei wird dann die Veränderung der Empfängersignale voll auf die Verstärkerstufen übertragen, wodurch eine von der Signalamplitude abhängige Modulation der Empfängersignale geschaffen wird. Die Empfängersignale sind somit unabhängig der absoluten Signalpegel. Diese Methode erlaubt eine Verwendung einfacherer und damit kostengünstigerer Operationsverstärker (OP-Verstärker) in der analogen Signalverarbeitung. Durch die getaktete Klemmung werden auch sehr niederfrequente Rauschkomponente im Empfängersignal bedingt durch das 1/f-Rauschen der OP-Verstärker unterhalb der halben Klemmfrequenz deutlich, unterdrückt, wodurch eine Verbesserung des Signal-Rausch-Verhältnisses im Empfängersignal erzielt wird.

In einer vorteilhaften Ausführung ist die Vorrichtung aus zwei Baugruppen aufgebaut, einem Optik-/Analogteil und einem Digitalteil. Der Optik-/Analogteil besteht dabei aus der Messzelle, dem Träger mit den darauf angebrachten Bauelementen sowie der gesamten analogen Signalverarbeitung einschließlich der AD- und DA- Wandler. Als zusätzliche Einheit befindet sich noch ein permanenter Parameterspeicher auf diesem Optik-/Analogteil, in dem alle Optik- und Analogparameter für eine Abgleich gespeichert sind. Damit ist das Optik-/Analogteil vollständig kalibrierbar, wobei die Schnittstellen des Optik-/Analogteils rein digital sind und somit jeweils gleichgroße Schnittstellenwerte aufweisen. Das Digitalteil ist völlig unabhängig von dem jeweils daran betriebenen Optik-/Analogteil, da jedes abgeglichenen Optik-/Analogteil mit jedem Digitalteil kombiniert werden kann. Dies erleichtert die Fertigung, da beide Teile separat gefertigt werden können. Gleichzeitig ist bei einer Endmontage keine Anpassung der Baugruppen mehr notwendig.

Anhand eines Ausführungsbeispieles mit Zeichnung soll die Erfindung näher erläutert werden.

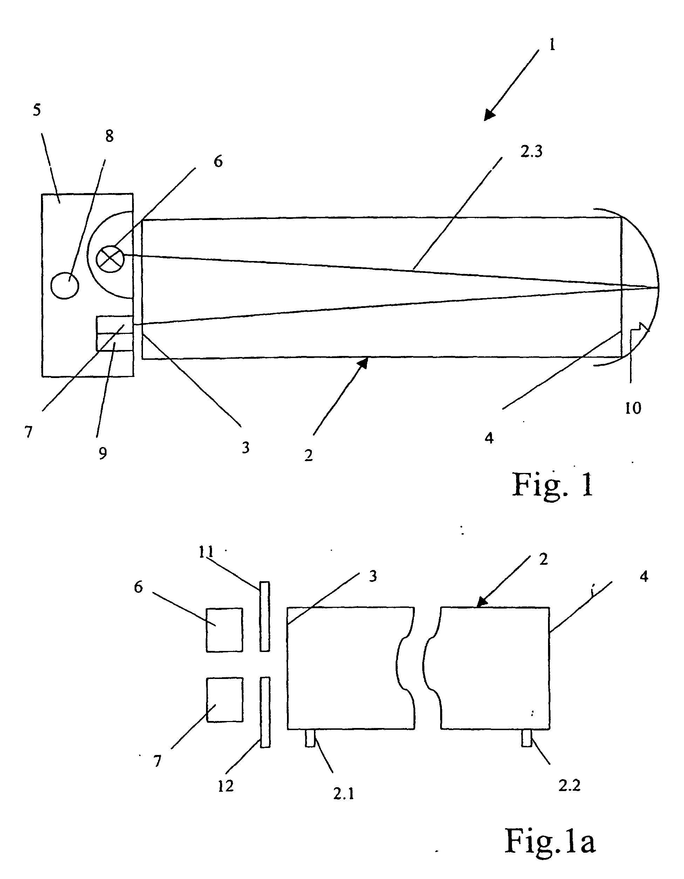

Es zeigen:
Fig. 1
   eine Darstellung des erfindungsgemäßen IR-Gasanalysators,
Fig. 1a
   eine Prinzipdarstellung für die Anordnung eines Chopperblades und eines Filters im Gasanalysator aus Fig.1,
Fig. 2
   in Blockbilddarstellung eine Verstärkerschaltung für ein Messsignal aus dem Gasanalysator,
Fig. 3
   eine modulartige Darstellung des Gasanalysators.

In Figur 1 ist mit dem Bezugszeichen 1 ein Gasanalysator (hier ohne Auswerteelektronik 20) bezeichnet, der aus einer vorzugsweise zylindrischen Messküvette als Messzelle 2 besteht, die an ihren beiden Seiten durch zwei Zellenfenstem 3 und 4 verschlossen ist. Die Zellenfenster 3,4 sind dabei aus einem IR-Strahlungen durchlässigen Material hergestellt. Ferner weist die zylindrische Messzelle 2 in bekannter Art und Weise ein Einlassrohr 2.1 und ein Auslassrohr 2.2 für ein Probengas auf, welche der übersichtlichkeitshalber nur in Fig. 1a näher dargestellt sind. Am Zellenfenster 3 ist ein Träger 5 angeordnet, auf dem sich ein Strahler 6 sowie ein Empfänger 7 in direkter Nähe zum Strahler 6 befinden. Der Träger 5 ist dabei ein thermisch stabilisiertes Metallelement, auf dem zusätzlich ein Heiz-und Regelelement 8, beispielsweise ein Transistor, als Direktheizung aufgebracht ist. Des weiteren ist ein weiteres IR-Bauelement, beispielsweise eine IR-Fotodiode 9, in unmittelbarer Nähe zum Empfänger 7 vorgesehen und vorzugsweise auf dem Träger 5 aufgebracht. An der dem Zellenfenster 3 gegenüberliegenden Seite der Messzelle 2, befindet sich hinter dem Zellenfenster 4 ein sphärischer Spiegel 10. Dieser kann auch direkter Bestandteil der Messzelle 2 sein.

In bekannter Art und Weise wird ein Proben- bzw. Prüfgas durch das Einlassrohr 2.1 in die Messzelle 2 eingelassen. Eine vom Strahler 6 emittierte und beispielsweise von einem Chopper blade 11 (Fig. 1a) gechoppte IR-Strahlung, gelangt in die Messzelle 2 und danach durch das Probengas. Die IR-Strahlung durchläuft eine Absorptionsstrecke 2.3 innerhalb der Messzelle 2 zweimal, wobei die IR-Strahlung durch die Komponenten des Probengases in bekannter Art und Weise zweimal abgeschwächt wird. Durch den sphärischen Spiegel 10 selbst erfolgt eine allgemeine Intensitätserhöhung der abgeschwächten IR-Strahlung durch Bündelung derselben auf den Empfänger 7. Zwischen der Messzelle 2 und dem Empfänger 7 sind mehrere Filter 12 angeordnet. Durch die verwendeten Filter 12 werden dabei von der abgeschwächten IR-Strahlung nur die Wellenlängen der zu messenden Gaskomponente durchgelassen. Vom Empfänger 7 wird diese vom Filter 12 durchgelassenen IR-Strahlung aufgenommen, wobei bekanntermaßen jedes Gas eine unterschiedliche Wellenlänge aufweist, welche in ein äquivalentes Signal umgewandelt wird. So besitzen das CO₂-Gas eine Wellenlänge λ von 4,25 oder 4,41 µm und das CO-Gas eine Wellenlänge λ von 4,64 µm.

Den Zusammenhang zwischen dem Lambert-Beer'schen Gesetz und der Absorption von IR-Strahlungen nutzend, wird in bekannter Art und Weise in der Auswerteelektronik 20 aus der aktuellen Intensitätsmessung und einer im O-Gas gemessenen Intensität die Gaskonzentration der gemessenen Gaskomponente ermittelt.

Statt eines Choppens kann der Strahler 6 auch geblinkt werden, wobei die IR-Strahlung aus dem Strahler 6 blinkend ausgesendet wird.

Um die Intensität der IR-Strahlung des Strahlers 6 für eine genaue Messung konstant zu halten, wird durch das auf dem Träger 5 direkt angebrachte Heiz-und Regelelement 8 über eine nicht näher dargestellte Steuerungs-/ Regelungsschaltung die Temperatur des Trägers 5 und damit des Strahters 6 und des Empfängers 7 auf vorzugsweise ca. 55°C konstant gehalten, wobei auch die Eigenwärme des Strahlers 6 berücksichtigt wird.
Über die IR-Fotodiode 9 wird dazu die Strahlertemperatur gemessen und als ein Referenzsignal für die durch den Strahler 6 wirklich erzeugte Strahlenleistung zur Verfügung gestellt, wodurch gleichzeitig eine Kontrolle des Strahlers 6 erfolgt. Dabei wird der Einschaltpunkt und der Endpunkt der Strahlerleistung bestimmt, um diese bei der nachfolgenden Auswertung zu kompensieren. Die Messung der Strahlungsleistung erfolgt vorzugsweise in einem kürzerwelligen Bereich (1 µm bis 2,5 µm), in der sich die Änderung der Strahlertemperatur wesentlich deutlicher bemerkbar macht, als im längerwelligen eigentlichen Meßbereich. Dazu ist die Empfindlichkeit der IR-Fotodiode 9 auf diesen Wellenbereich abgestimmt, beispielsweise liefern eines hohen Signals bei geringer Energie.

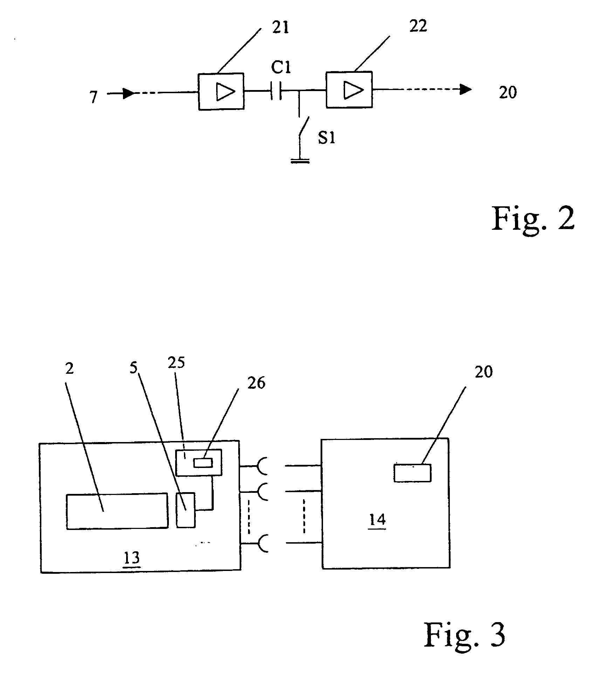

Die am Empfänger 7 gemessenen Signale sind sehr klein und müssen für eine Auswertung bekanntermaßen von ca. 100µV auf ca. 4 V verstärkt werden. Dazu werden diese Signale auf mehrere, mindestens zwei hintereinander geschaltete Verstärkerstufen 21, 22 einer analogen Signalverarbeitung 25 gegeben.
Für eine zusätzliche Nachkompensation der Empfängersignale bzw. um auftretende analoge Signaldriften bei blinkenden NDIR-Systemen zu unterdrücken, erfolgt vorzugsweise eine AC-Kopplung C₁ der Verstärkerstufen 21, 22 untereinander (Fig.2). Der der tiefsten Strahlertemperatur entsprechende Spannungspegel wird am Empfänger 7 ermittelt und als definierter Eingangs-Signaiwert auf den Eingang der Verstärkerstufe 21 geklemmt. Bei Einschaltung des Strahlers 6 in den Blinkrhythmus wird die Klemmung über den Schalter S₁ abgeschaltet, so daß nur die AC-Kopplung über den Kondensator C₁ zwischen den Verstärkerstufen 21, 22 verbleibt, wodurch eine vom absoluten Signalpegel des Empfängersignals unabhängige Verstärkung erfolgt.

In einer weiteren vorteilhaften Ausführung (Fig.3) ist die Vorrichtung aus zwei separaten Baugruppen aufgebaut, einem Optik-/Analogteil 13 und einem Digitalteil 14. Der Optik-/Analogteil 13 besteht dabei aus der Messzelle 2, dem Träger 5 mit seinen aufgebrachten Bauelementen sowie der gesamten, hier nicht näher dargestellten analogen Signalverarbeitung 25 einschließlich der nicht näher dargestellten AD- und DA-Wandler. Als zusätzliche Einheit der analogen Signalverarbeitung 25 befindet sich noch ein Parameterspeicher 26, beispielsweise ein EEPROM, auf diesem Optik-/Analogteil 13, in dem alle Optik- und Analogparameter gespeichert sind. Damit ist das Digitalteil 14 völlig unabhängig von dem jeweils daran betriebenen Optik-/Analogteil 13, wodurch jedes abgeglichene Optik-/Analogteil 13 mit jedem Digitalteil 14 kombiniert werden kann.

Es versteht sich von selbst, dass im Rahmen des Erfindungsgedankens auch Änderungen möglich sind. So kann die Messzelle 2 statt nur einem sphärischen Spiegel 10 weitere Spiegel für einen Mehrfachdurchlauf der IR-Strahlung aufweisen, wobei dann der Strahler 6 vom Empfänger 7 etwas entfernt auf dem Träger 5 angeordnet ist, damit ein weiterer Spiegel vorzugsweise zwischen beiden, jedoch innerhalb der Messzelle 2 angeordnet ist.

## Patentansprüche

1. Vorrichtung zur Analyse einer Gasprobe mittels Infrarot-Absorption, aufweisend einen lichtemittierenden Strahler (6), eine Messzelle (2), mindestens einen Spiegel (10), der an einer der Seiten der Messzelle (2) angebracht ist und einen lichtaufnehmenden Empfänger (7) sowie eine Auswerteeinrichtung (20), wobei der Strahler (6) und der Empfänger (7) auf einem temperaturstabilisierten Träger (5) in unmittelbarer Nähe zueinander und an der dem Spiegel (10) gegenüberliegenden Seite (3) der Messzelle (2) angeordnet sind, **dadurch gekennzeichnet, dass** ein temperaturstabilisiertes IR-Element (9) in unmittelbarer Nähe zum Empfänger (7) angeordnet ist, wobei durch das IR-Element (9) im NIR-Bereich die Strahlungsleistung des Strahlers (6) gemessen und dieser Messwert zur Temperaturstabilisierung des Trägers (5) herangezogen wird.

2. Vorrichtung nach Anspruch 1, **dadurch gekennzeichnet, dass** das IR-Element (9) auf dem Träger (5) untergebracht ist.

3. Vorrichtung nach Anspruch 1 oder 2, **dadurch gekennzeichnet, dass** das IR-Element (9) eine IR-Fotodiode ist.

4. Vorrichtung nach einem oder mehreren der vorgenannten Ansprüche 1 - 3, **dadurch gekennzeichnet, dass** der Spiegel (10) ein sphärischer Spiegel ist.

5. Vorrichtung nach Anspruch 1 bis 4, **dadurch gekennzeichnet, dass** auf dem gemeinsamen Träger (5) eine Direktheizung (8) zur Temperaturstabilisierung des Trägers (5) aufgebracht ist, wobei die Direktheizung (8) als ein gemeinsames Regel- und Heizelement ausgeführt ist.

6. Vorrichtung nach Anspruch 5, **dadurch gekennzeichnet, dass** die Direktheizung (8) ein Transistorelement ist.

7. Vorrichtung nach einem oder mehreren der vorgenannten Ansprüche 1 bis 6, **dadurch gekennzeichnet, dass** die zur Auswertung der Signale des Empfängers (7) nachgeschalteten Verstärkerstufen (21, 22) miteinander durch einen Kondensator (C₁) und Schalter (S₁) elektrisch derart verbunden sind, daß bei Einschaltung des Strahlers (6) der Schalter (S₁) öffnet und nur eine AC-Kopplung durch den Kondensator (C₁) zwischen den Verstärkerstufen (21, 22) verbleibt.

8. Vorrichtung nach einem oder mehreren der vorgenannten Ansprüche 1 bis 7, **dadurch gekennzeichnet, dass** in einem Parameterspeicher (26) alle Optik- und Analogparameter gespeichert sind, wobei der Parameterspeicher (26) Bestandteil einer analogen Signalverarbeitung (25) ist.

9. Vorrichtung nach einem oder mehreren der vorgenannten Ansprüche 1 bis 8, **dadurch gekennzeichnet, dass** die Vorrichtung in ein Optik-/Analogteil (13) und ein Digitalteil (14) unterteilt und dadurch modulartig aufgebaut ist, wobei das Optik-/Analogteil (13) aus der Messzelle (2), dem Träger (5) mit den darauf angebrachten Bauelementen sowie der analogen Signalverarbeitung (25) und das Digitalteil (14) aus der digitalen Auswerteelektronik (20) bestehen.

## Claims

1. Device for analysing a gas sample by means of infrared absorption, comprising a light-emitting radiator (6), a measuring cell (2), at least one mirror (10) that is disposed on one of the sides of the measuring cell (2) and a light-absorbing receiver (7) and also an evaluating appliance (20), wherein the radiator (6) and the receiver (7) are disposed on a temperature-stabilized support (5) in the immediate vicinity of one another and at that side (3) of the measuring cell (2) that is opposite the mirror (10), **characterized in that** a temperature-stabilized IR element (9) is disposed in the immediate vicinity of the receiver (7), wherein the IR element (9) measures the radiation power of the radiator (6) in the NIR range and this measurement is used to stabilize the temperature of the support (5).

2. Device according to Claim 1, **characterized in that** the IR element (9) is mounted on the support (5).

3. Device according to Claim 1 or 2, **characterized in that** the IR element (9) is a IR photodiode.

4. Device according to one or more of the above Claims 1-3, **characterized in that** the mirror (10) is a spherical mirror.

5. Device according to Claims 1 to 4, **characterized in that** a direct heater (8) for stabilizing the temperature of the support (5) is fitted on the shared support (5), wherein the direct heater (8) is designed as a combined control and heating element.

6. Device according to Claim 5, **characterized in that** the direct heater (8) is a transistor element.

7. Device according to one or more of the above Claims 1 to 6, **characterized in that** the downstream amplifier stages (21, 22) for evaluating the signals of the receiver (7) are electrically interconnected by a capacitor (C₁) and switch (S₁) in such a way that, when the radiator (6) is switched on, the switch (S₁) opens and only an AC coupling through the capacitor (C₁) remains between the amplifier stages (21, 22).

8. Device according to one or more of the above Claims 1 to 7, **characterized in that** all the optical and analog parameters are stored in a parameter memory (26), wherein the parameter memory (26) is a component of an analog signal processor (25).

9. Device according to one or more of the above Claims 1 to 8, **characterized in that** the device is subdivided into an optical/analog section (13) and a digital section (14) and is thereby of modular construction, wherein the optical/analog section (13) comprises the measuring cell (2), the support (5) with the components disposed thereon and also the analog signal processor (25), and the digital section (14) comprises the digital evaluation electronics (20).

## Revendications

1. Dispositif pour analyser un échantillon gazeux par absorption infrarouge, comprenant un radiateur émettant de la lumière (6), une cellule de mesure (2), au moins un miroir (10) monté sur l'un des côtés de la cellule de mesure (2), et un récepteur de lumière (7) ainsi qu'un équipement d'analyse (20), le radiateur (6) et le récepteur (7) étant disposés au voisinage immédiat l'un de l'autre sur un support (5) stabilisé en température et sur le côté (3) de la cellule de mesure (2) opposé au miroir (10), **caractérisé en ce qu'**un élément IR (9) stabilisé en température est disposé au voisinage immédiat du récepteur (7), la puissance rayonnée du radiateur (6) étant mesurée par l'élément IR (9) dans la gamme IRP et cette valeur de mesure étant utilisée pour la stabilisation thermique du support (5).

2. Dispositif suivant la revendication 1, **caractérisé en ce que** l'élément IR (9) est logé sur le support (5).

3. Dispositif suivant l'une des revendications 1 et 2, **caractérisé en ce que** l'élément IR (9) est une photodiode IR.

4. Dispositif suivant l'une ou plusieurs des revendications précitées 1-3, **caractérisé en ce que** le miroir (10) est un miroir sphérique.

5. Dispositif suivant les revendications 1 à 4, **caractérisé en ce qu**'un chauffage direct (8) est placé sur le support commun (5) pour la stabilisation thermique du support (5), le chauffage direct (8) étant réalisé sous forme d'un élément de chauffage et de régulation commun.

6. Dispositif suivant la revendication 5, **caractérisé en ce que** le chauffage direct (8) est un élément transistorisé.

7. Dispositif suivant l'une ou plusieurs des revendications précitées 1 à 6, **caractérisé en ce que** les étages d'amplification (21, 22) montés en aval pour l'exploitation des signaux du récepteur (7) sont reliés électriquement entre eux par un condensateur (C₁) et un interrupteur (S₁) de telle sorte que, lors de la commutation du radiateur (6), l'interrupteur (S₁) s'ouvre et qu'il ne reste qu'un couplage en CA par le condensateur (C₁) entre les étages d'amplification (21, 22).

8. Dispositif suivant l'une ou plusieurs des revendications précitées 1 à 7, **caractérisé en ce que** tous les paramètres analogiques et optiques sont mémorisés dans une mémoire de paramètres (26), la mémoire de paramètres (26) faisant partie intégrante d'un traitement analogique des signaux (25).

9. Dispositif suivant l'une ou plusieurs des revendications précitées 1 à 8, **caractérisé en ce que** le dispositif est subdivisé en une partie optique/analogique (13) et en une partie numérique (14) et a de ce fait une structure modulaire, la partie optique/analogique (13) étant constituée de la cellule de mesure (2), du support (5) avec les composants montés sur ce dernier, ainsi que du traitement analogique des signaux (25), et la partie numérique (14) étant constituée de l'électronique d'exploitation numérique.
